Europäisches Patentamt

(19) European Patent Office

Office européen des brevets

(11) Publication number: **0 006 816**

**B1**

(12) **EUROPEAN PATENT SPECIFICATION**

(45) Date of publication of patent specification: **14.07.82**

(51) Int. Cl.³: **H 04 Q 3/68,** H 04 Q 3/00, H 04 M 7/00

(21) Application number: **79400438.2**

(22) Date of filing: **28.06.79**

(54) Nodal structure switching network.

(30) Priority: **29.06.78 FR 7819506**

(43) Date of publication of application:
**09.01.80 Bulletin 80/1**

(45) Publication of the grant of the patent:
**14.07.82 Bulletin 82/28**

(84) Designated Contracting States:
**BE DE GB NL SE**

(56) References cited:
**FR - A - 2 366 754**
**GB - A - 1 110 367**

**IEEE INTERNATIONAL CONFERENCE ON COMMUNICATIONS, 16—18 Juni 1975 San Francisco, New York, U.S.A. K. RAHKO: "Comparison of different connecting networks: grid connecting network and its control with microprocessors", pages 22.15—22.19 PROCEEDINGS OF THE INTERNATIONAL TELETRAFFIC CONGRESS, 13—20 June 1973 Stockholm, S.A.E. JOEL: "Nodal Switching Networks"**

(73) Proprietor: **Duret, Christian**
**6, rue de l'Epargne**
**F-92320 Chatillon (FR)**

(72) Inventor: **Duret, Christian**
**6, rue de l'Epargne**
**F-92320 Chatillon (FR)**

(74) Representative: **Martinet, René et al,**
**Cabinet Martinet 62, rue des Mathurins**
**F-75008 Paris (FR)**

Courier Press, Leamington Spa, England.

## Nodal structure switching network

The present invention concerns a switching system architecture with improved growth characteristics. This architecture can be used for time or space division switching. The system can be expanded between a hundred or so and several tens of thousands subscriber lines with only one basic equipment. This equipment is an elementary nodal switching network or node containing all the hardware involved during a call. A node can carry calls from (or to) its own terminals and transit calls from other nodes. Each node is linked with the same limited number of other nodes. Each node is linked with the same limited number of other nodes through internodal links and during growth additions a small number of links are changed. Hardware troubles are limited to one node and have little or no affect on the overall blocking characteristics of the network.

Each elementary nodal switching network is able to deal with its own subscriber and trunk traffic together with the internodal traffic. This nodal structure is therefore very different from the graded structure of the specialized switching stations which form the conventional telecommunication network with their different switching levels: satellite exchange, central exchange, toll exchange, transit exchange, international exchange,...and from the graded structure in the switching units proper in which the subscriber selection stage and the group selection stage have different functions.

The advantages of a nodal structure of identical elementary nodal switching networks over a conventional switching network system are the following:

It is possible to attain a high rate up to 100 of the maximum to the minimum capacity of the switching network unit formed by the elementary nodal switching networks;

Capacity extensions can be made by small increases, say of 1% of the old capacity without noticeably changing the structure of the system already built;

Breakdown in a node only affects a limited number of subscriber lines or trunks.

Switching network nodal structures have already been proposed in the following publications:

(a) FR—A—2 366 754 (I.B.M.);
(b) Proceedings of the International Teletraffic Congress, 13—20 June 1973 (A.E. JOEL: "Nodal Switching Networks"), pages 312/1—312/8;
(c) IEEE International Conference on communications, 16—18 June 1975 (K. RAHKO: "Comparison of different connecting networks; grid connecting network and its control with microprocessors"), pages 22.15—22.19; and
(d) GB—A—1 110 367 (I.B.M.).

Reference (a) can be analyzed in the following manner:

Let x, y, z be the co-ordinates of a current node in a three dimensional space, x, y, z being integers selected in the following ranges:

$$0 \leqslant x \leqslant X$$
$$0 \leqslant y \leqslant Y$$
$$0 \leqslant z \leqslant Z$$

The number of the network nodes is:

$$N \leqslant X.Y.Z.$$

A current node can also be defined by its address $i$ such that:

$$i = x + yX + zXY$$

The definitions of a node by its co-ordinates x, y, z or by its address $i$ are strictly equivalent and can be readily applied to a two-dimensional space or extended to spaces of more than three dimensions:

x, y, z can be derived from $i$ by the expressions:

$$x = i \ (\text{modulo } X)$$
$$y = (i - x)/X \ (\text{modulo } Y)$$
$$z = (i - x - yX)/XY \ (\text{modulo } Z)$$

In reference (a), the node of co-ordinates (x, y, z) is linked to the nodes of co-ordinates:

$$((x \pm 1) \ \text{modulo } X, y, z)$$
$$(x, (y \pm 1) \ \text{modulo } Y, z)$$
$$(x, y, (z \pm 1) \ \text{modulo } Z)$$

Therefore, each node is linked to four adjacent nodes in a two-dimensional arrangement and to six adjacent node in a three-dimensional arrangement. When the nodes are defined by addresses instead of co-ordinates, node $i$ is connected to nodes $i \pm 1$, $i \pm X$, $i \pm XY$.

As the nodes connected to node $i$ are a part of the network of nodes, the number of nodes must be:

$$N = 0, \text{modulo } XY$$

It results that the extension of the number of nodal switching networks in a switching network unit. i.e. the extension of the switching network unit, can only proceed row by row in a two-dimensional switching network unit, plane by plane in a three-dimensional switching network unit and hyperplane by hyperplane in a more than three dimensional switching network unit.

Extension node by node of a switching network unit is not taught by the prior art.

The object of the present invention is to provide a switching network unit formed of a plurality of identical elementary switching networks or nodes, said unit having any number of nodes and the capacity of which can be increased node by node by cutting out the internodal links between a small number of nodes and connecting the free ends of these links thus cut out to the added node.

According to its most general definition, the switching network unit comprises a plurality of N elementary nodal switching networks, N being at most equal to the product:

$$N \leqslant \prod_{m=1}^{m=p} f_m \qquad 1 \leqslant m \leqslant p$$

of p integers $f_1$ to $f_p$ each of which is at least equal to 2, each nodal switching network being connected by external lines to input and output terminals of the switching network unit and by internodal links to certain of the other nodal switching networks. If i $(0 \leqslant i \leqslant (N-1))$ designates the address of an elementary nodal switching network, each elementary nodal switching network is selectively connected through internodal links in the following way:

If the elementary nodal switching network has an address i which is smaller than or equal to:

$$i \leqslant N-1- \prod_{m=0}^{m=k} f_m$$

(where $f_0$ is taken equal to 1), it is connected to all the elementary nodal switching networks having addresses:

$$k_k = i + \prod_{m=0}^{m=k} f_m \qquad (1)$$

If the elementary nodal switching network has an address i which is higher than or equal to:

$$i \geqslant N- \prod_{m=0}^{m=k} f_m$$

it is connected to the elementary nodal switching network having the address:

$$i_{p+k} = (i+1) \text{ modulo} \prod_{m=0}^{m=k} f_m \qquad (2)$$

where k is any one of the integers from 0 inclusive to (p−1) inclusive. In the following, we shall write:

$$\prod_{m=1}^{m=k} f_m = \pi(k)$$

The p integers $f_1$ to $f_p$ can be taken equal to the same value f. The connection rule then is expressed by:

If address i is smaller than or equal to $N-1-f^k$, the elementary nodal switching network of address i is connected to all the elementary nodal switching networks of addresses:

$$i_k = i + f^k \qquad (1')$$

If address i is higher than or equal to $N-f^k$, the elementary nodal switching network of address i is connected to the elementary nodal networks of addresses:

$$i_{p+k} = i+1, \text{ modulo } f^k \qquad (2')$$

The advantages of the arrangement of the invention are the followings:

— the distribution of the switching traffic between the elementary nodal switching networks through the internodal connections is improved; and
— the calculation of the internodal connection pattern which is necessarily carried out by computer when the number of elementary nodal switching networks is large is greatly simplified.

By analogy with the geometrical terminology, parameter p will be called "number of dimensions" or "dimension" of the unit while parameter f will be named "the base".

For guidance only, some information will be given hereunder about the determination of the specific parameters of a switching unit designated for dispatching a determined traffic between a determinal number of subscribers.

From simulation by computer, the mean distance $\bar{d}$ between the nodes is approximately given by:

$$\bar{d} \simeq pf/4 = pN^{1/p}/4 \text{ (since } N=f^p\text{)}$$

The value of p is determined by minimizing the value of the mean distance $\bar{d}$, i.e. for:

$$d\bar{d}/dp = N^{1/p}[1-(\log_e N)/p] \simeq 0$$

and consequently for:

$$p \simeq \log_e N$$

A switching unit for 15000 subscribers comprises for instance N=75 elementary nodal switching networks having each $a$=200 subscribers connected thereto. Consequently:

dimension $p \simeq \log_e N = \log_e 75 = 4$
base $f \simeq N^{1/p} = (75)^{1/4} \simeq 3$
mean distance $\bar{d} \simeq pf/4 = 4 \times 3/4 = 3$

The invention together with the characteristics and advantages thereof will be better understood by disclosing particular embodiments of the same. The disclosure will be made in relation to the accompanying drawings in which:

Fig. 1 is a block diagram of a switching network unit according to the invention, having N=23 nodes and in which the number of dimensions p is equal to 3 and the common base f along each dimension is equal to 3.

Fig. 2 shows the nodal switching network connection table of a switching network unit according to the invention having N=23 nodes in the case where p=3 while the three bases along the three dimensions are respectively $f_1=2$; $f_2=3$ and $f_3=4$.

Fig. 3 shows the nodal switching network connection table of the nodal switching network of Fig. 1;

Fig. 4 is a matrix representation of the connection table of Fig. 3;

Fig. 5 shows the nodal switching network connection table of a switching network unit according to the invention in which, as in the case of Fig. 3, p=3 but N=24 (and consequently comprising one node in addition);

Fig. 6 is a matrix representation of the connection table of Fig. 5;

Fig. 7 is a diagram showing the links to be cut out and the links to be established for obtaining the connection table of Fig. 5 (N=24) from the connection table of Fig. 3 (N=23); and

Fig. 8 represents a block diagram of a part of the switching unit of Fig. 1.

Two examples of the connection chart will now be given.

Example No. 1 (application of expressions (1) and (2))

Let us take N=23; p=3; $f_0=1$
$f_1=2$; $f_2=3$; $f_3=4$

$\pi(0)=1$ $\pi(1)=2$ $\pi(2)=6$ $\pi(3)=24$

| | |
|---|---|
| $N-\pi(0)-1=21$ | $N-\pi(0)=22$ |
| $N-\pi(1)-1=20$ | $N-\pi(1)=21$ |
| $N-\pi(2)-1=16$ | $N-\pi(2)=17$ |

If k=0 and i⩽21, the elementary nodal switching network of address $i$ is connected to elementary nodal switching networks of addresses:

$$i_k=i+1$$

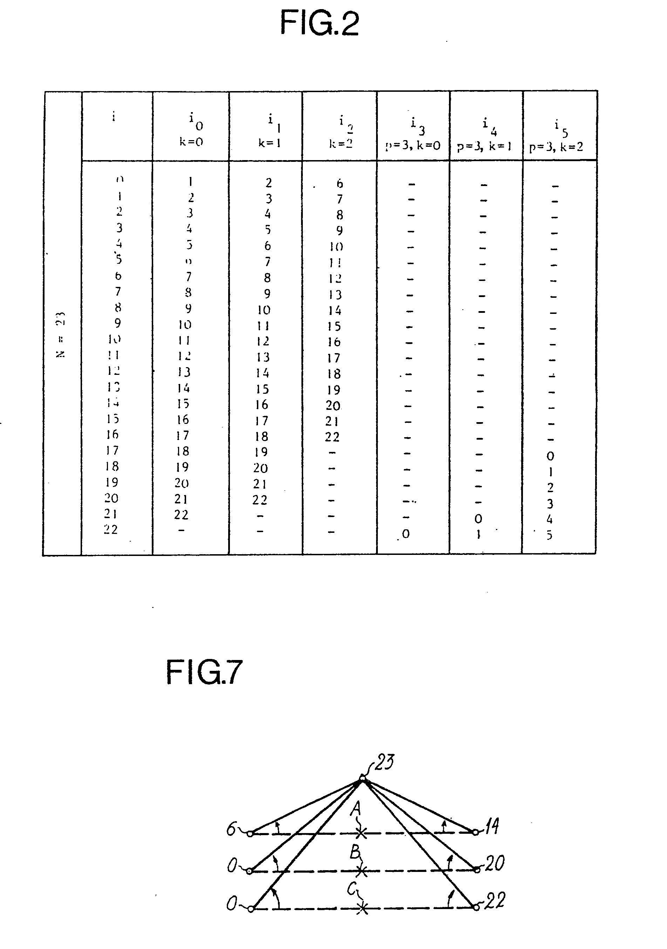

Thus, the connection rule is given by the first column of the table of Fig. 2.

If k=1 and i⩽20, the elementary nodal switching network of address $i$ is connected to elementary nodal switching networks of addresses:

$$i_k=i+2$$

Thus, the connection rule is given by the second column of the table of Fig. 2.

If k=2 and i⩽16, the elementary nodal switching network of address $i$ is connected to elementary nodal switching networks of addresses:

$$i_k=i+6$$

Thus, the connection rule is given by the third column of the table of Fig. 2.

If k=0 and i⩾22, the elementary nodal switching network of address $i$ is connected to the elementary nodal switching networks of addresses:

$$i_{p+k}=i+1, \text{modulo } 1$$

Thus, the connection rule is given by the fourth column of the table of Fig. 2.

If k=1 and i⩾21, the elementary nodal switching network of address $i$ is connected to the elementary nodal switching networks of addresses:

$$i_{p+k}=i+1, \text{modulo } 2$$

Thus, the connection rule is given by the fifth column of the table of Fig. 2.

If k=2 and i⩾17, the elementary nodal switching network of address $i$ is connected to the elementary nodal switching networks of addresses:

$$i_{p+k}=i+1, \text{modulo } 6$$

Thus, the connection rule is given by the sixth column of the table of Fig. 2.

Equations (1) and (2) cannot be used simultaneously for each value of $k$, that is to say that the elementary nodal switching network of address $i$ cannot be connected at the same time to an elementary nodal switching network of address $i_k$ and to an elementary nodal switching network of address $i_{p+k}$.

The integer $k$ may take any of the consecutive values from 0 to (p−1), that is to say p values. Relationships (1) and (2) determine p elementary nodal switching networks to be connected to any given elementary nodal switching network. Nevertheless, since each address is firstly chosen as the address $i$ of an originating elementary nodal switching network and secondly as the address $i_k$ or $i_{p+k}$ of a terminating elementary nodal switching network, each elementary nodal switching network is always the point of convergence of 2p internodal links. For example, it can be seen in the connection table of Fig. 2 that elementary nodal switching network 8 is connected to elementary nodal switching networks 2, 6, 7, 9, 10 and 14.

Whatever the number N of elementary nodal switching networks in the network unit, the elementary nodal switching network of address (N−1) is always connected to the elementary nodal switching network of address 0, because

$N-1$ is equal to $N-\pi(0)$ and equation (2) then gives:

$$i_{p+k}=N \bmod 1=0$$

Example No. 2 (application of expressions (1') and (2'))

In this example $N=23$; $p=3$; $f_1=f_2=f_3=f=3$ and consequently $k=0$ to $(p-1)=0$ to 2.

Relations (1') and (2') become respectively:

$$i_k=i+3^k \qquad (1'')$$

$$i_{p+k}=i+1, \bmod 3^k \qquad (2'')$$

Equation (1'') applies when:

$$i \leqslant 22-3^k$$

and equation (2'') when:

$$i \geqslant 23-3^k$$

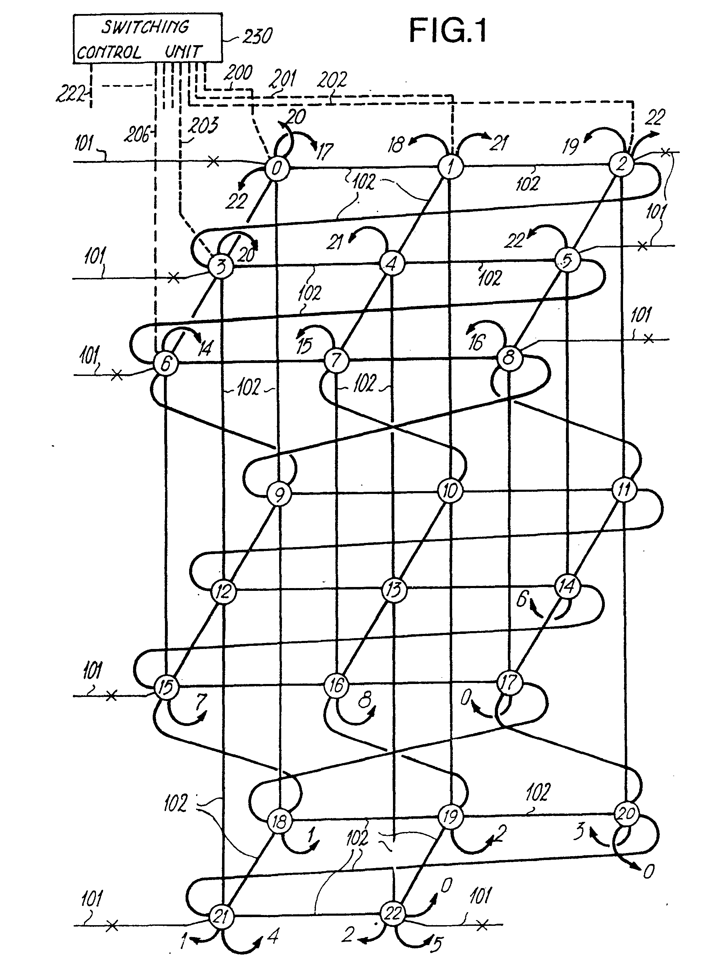

Referring now to Fig. 1, there is shown a switching network unit and a switching control unit 230.

The switching network unit comprises 23 elementary nodal switching networks numbered from 0 to 22 inclusive, multichannel external links 101 connecting the elementary nodal switching networks to the inputs and outputs of the switching network unit and multichannel inter-nodal links 102 connecting therebetween the elementary nodal switching networks. Links 101 are drawn in thin lines and links 102 in thick lines.

Control unit 230 respectively controls elementary nodal switching networks 0 to 22 through control leads 200 to 222 drawn in dotted lines. Only some of the control leads are drawn in order not to overburden the drawing. If the elementary nodal switching networks are space division switching networks, control unit 230 controls the connection (or disconnection) between specific incoming and outgoing lines. If the elementary nodal switching networks are multiplex time division switching networks, control unit 230 controls the connection (or disconnection) between specific time slots in incoming and outgoing MTD highways.

In order to facilitate the reading of the block diagram of Fig. 1, only a few external links 101 and a few internodal links 102 are completely illustrated. But those internodal links which are not completely illustrated are at least represented as segments reduced to the parts which they originate from or terminate to. Each incomplete internodal link originating from a given elementary nodal switching network is represented as a curved arrow bearing the number of the elementary nodal switching network at which it terminates. For instance, internodal link 102 from elementary nodal switching network 7 to elementary nodal switching network 15 is represented by a curved arrow originating at 7 and marked 15 and by a curved arrow originating at 15 and marked 7.

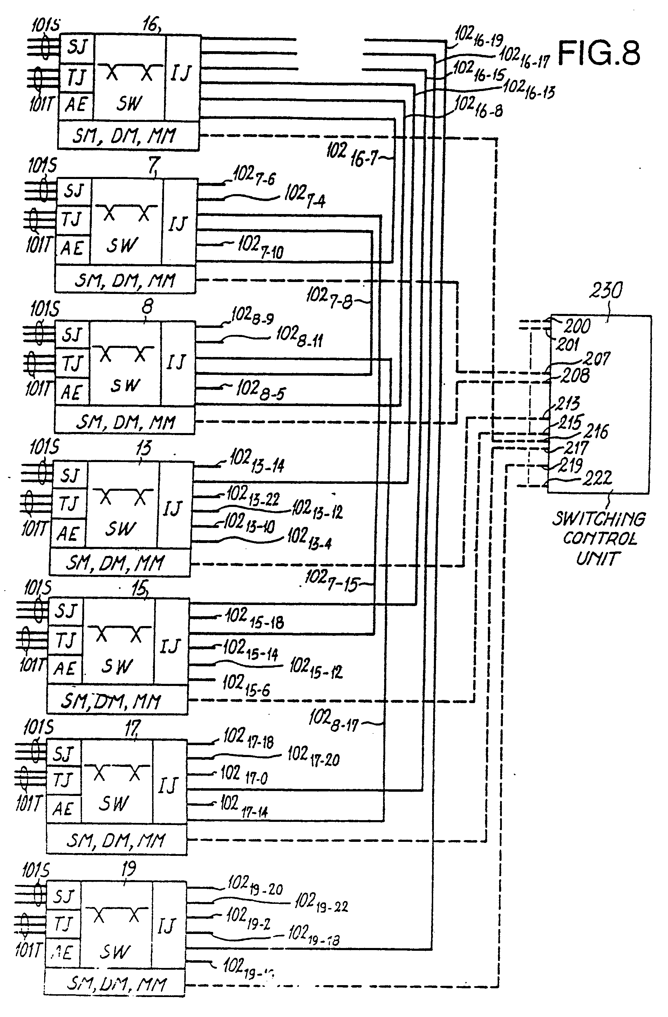

A block diagram of an elementary nodal switching network is given hereunder in Fig. 8. With regard to the switching control unit 230, it is of known type and need not be described because the invention basically lies in the arrangement of the internodal connections of the elementary nodal switching networks therebetween.

The switching network unit of Fig. 1 is that of Example No. 2.

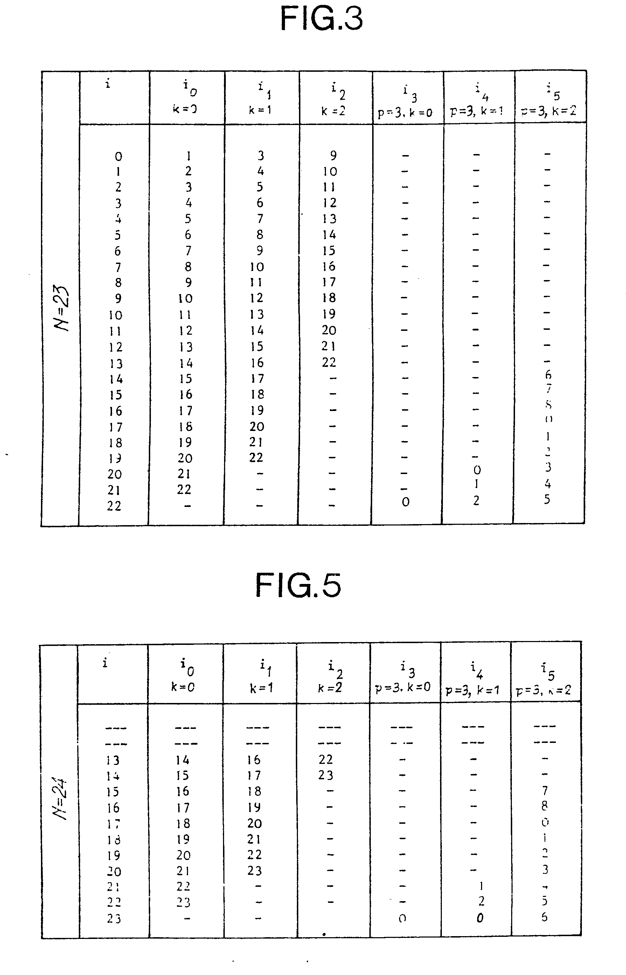

The table of Fig. 3 gives, for each of the 23 values of the address $i$, the values of the addresses $i_0$, $i_1$, $i_2$, $i_3$, $i_4$ and $i_5$ of the elementary nodal switching networks to be connected to that of address $i$ through an internodal link 102.

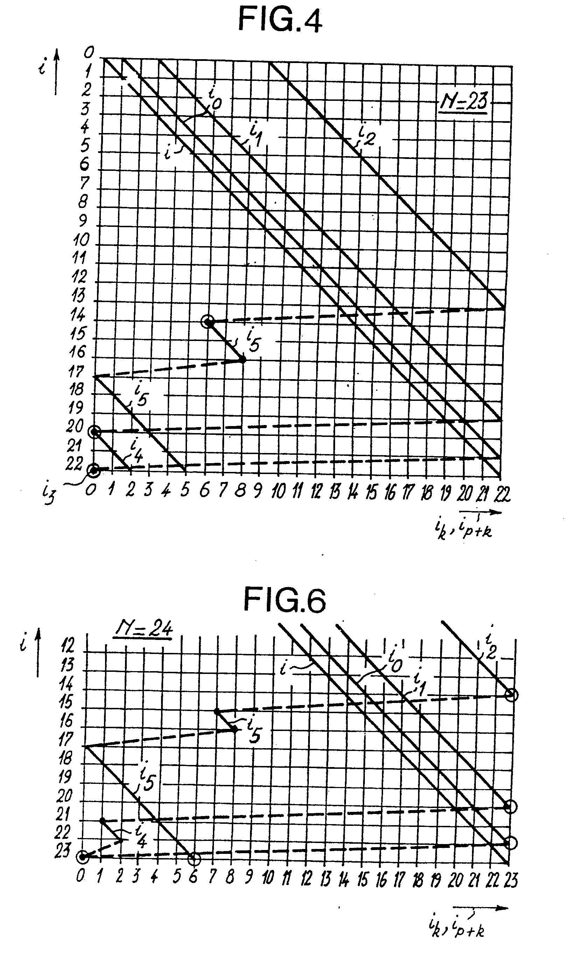

Referring now to Fig. 4, it represents in matricial form the internodal link connection pattern. The diagonal of the matrix is assigned to the addresses $i$ and the rows and columns to addresses $i_k$ and $i_{p+k}$. It results that crosspoints represent links between elementary nodal switching networks having as their addresses the co-ordinates of the crosspoints. Instead of discrete points, Fig. 4 represents straight lines passing through the said discrete points, except crosspoint $i_3$ which represents the internodal link between elementary nodal switching network of addresses 22 and 0 and which remains detached. The oblique dotted lines are junction lines between the three segments $i_2$ and $i_5$ (twice), $i_5$ being the continuation of $i_2$ and two segments $i_1$ and $i_4$, $i_4$ being the continuation of $i_1$. In order to find all the internodal links connected to the elementary nodal switching network having a given address $i$ represented by a crosspoint $(i, i)$ of the diagonal of the matrix, one must follow the row passing through said crosspoint and take notice of the abscissa of the points of intersection of this row with the diagonals and the parallels to the diagonal, then follow the column passing through said crosspoint and take notice of the ordinates of the points of intersection of this column with the diagonal and the parallels to the diagonal. For example, the horizontal row passing through crosspoint $(11, 11)$ of the diagonal meets oblique line $i_0$ at abscissa 12, oblique line $i_1$ at abscissa 14 and oblique line $i_2$ at abscissa 20 and the vertical column passing through crosspoint $(11, 11)$ of the diagonal meets oblique line $i_0$ at ordinate 10, oblique line $i_1$ at ordinate 8 and oblique line $i_2$ at ordinate 2. Thus elementary nodal switching network of address 11 is linked to elementary nodal switching networks of addresses 2, 8, 10, 12, 14 and 20.

As other examples let us consider the elementary nodal switching networks of respective addresses 0 and 1. The first is linked to elementary nodal switching networks of addresses 1, 3, 9, 17, 20, 22 and the second is linked to elementary nodal switching networks of addresses 0, 2, 4, 10, 18 and 21. In this case, when following the column passing through the cross-point (1, 1) the intersection with $i_o$ (address 0) is above the crosspoint and the intersection with $i_5$ (address 18) and $i_4$ (address 21) are below the crosspoint.

One finds again that each elementary nodal switching network is linked to six other elementary nodal switching networks.

One will now refer to Fig. 5. It shows a table similar to the table of Fig. 3 except that the number of elementary nodal switching networks N is no longer 23 but is instead 24. In other words the table of Fig. 5 is obtained by adding an additional elementary nodal switching network to the 23 of Fig. 1. Fig. 5 moreover represents only the lower section of the table since the fourteen first lines of the tables of Figs. 3 and 5 are the same.

The matrix of Fig. 6 represents the table of Fig. 5 in the same manner as the matrix of Fig. 4 represented the table of Fig. 3. By comparing the two matrices, it can be seen that the switching network unit including N=24 elementary nodal switching networks differs from the switching network unit including N=23 elementary nodal switching networks by elimination of p=3 internodal links, namely internodal links 14—6, 20—0 and 22—0 (the corresponding crosspoints in Fig. 4 are surrounded by small circles) and by addition of 2p=6 internodal links, namely internodal links 14—23, 20—23, 22—23, 23—0 and 23—6, i.e. the internodal links connecting to the others the additional elementary nodal switching network (the corresponding crosspoints in Fig. 6 are surrounded by small circles).

It is thus verified that it is sufficient to cut out p old internodal links and to add 2p new internodal links for extending by one unit the number of elementary nodal switching networks.

It is to be noticed that the internodal links eliminated and the internodal links added are correlated. In Fig. 7 there is shown the eliminated links 14—6 cut out at A, 20—0 cut out at B and 22—0 cut out at C. The stub 6—A is connected to 23 and forms link 6—23; the two stubs O—B, O—C are connected to 23 and form links O—23; the stub 14—A is connected to 23 and forms link 14—23; the stub 20—B is connected to 23 and forms link 20—23 and the stub 22—C is connected to 23 and forms link 22—23. Thus three links are cut out forming six stubs which are connected to the new elementary nodal switching network 23.

Referring now to Fig. 8, it represents 7 elementary nodal switching networks, namely those of addresses 16, 7, 8, 13, 15, 17, 19 subscriber's lines 101 S and trunks 101 T originating from and terminating at said elementary nodal switching networks, internodal links $102_{16-7}$, $102_{16-8}$, $102_{16-13}$, $102_{16-15}$, $102_{16-17}$ and $102_{16-19}$ and control leads 216, 207, 208, 213, 215, 217 and 219 connecting each elementary switching network to switching control unit 230.

Each elementary nodal switching network comprises subscriber's junctors SJ, trunk junctors TJ, auxiliary equipment AE (such as multifrequency code receivers, tone generators,...), internodal junctors IJ (such as multifrequency code senders and receivers), a switching network proper SW, scanner means SM, distributor means DM and marker means MM.

Other functions than those performed by the elementary nodal switching network such as dialing code registering, translation, route finding,...are performed in the switching control unit 230. Additional explanations are unnecessary since the structure of the elementary nodal switching networks is conventional and well known by those skilled in the telephone art.

## Claims

1.—A nodal structure switching network unit comprising a plurality of N elementary nodal switching networks (0—22) having addresses comprised between 0 inclusive and (N—1) inclusive, N being at most equal to the product

$$N= \mathop{\pi}_{m=1}^{m=p} f_m \quad \text{with } 1 \leqslant m \leqslant p$$

of $p$ integers $f_1$ to $f_p$ each of which is at least equal to 2, external lines (101) connecting each elementary nodal switching network to input and output terminals of the switching network unit and internodal links (102) connecting each elementary nodal switching network to 2p other elementary nodal switching networks, characterized in that:

— any elementary switching network having an address $i$ such that:

$$i \leqslant N-1- \mathop{\pi}_{m=0}^{m=k} f_m$$

where $k$ is any one of the integers from 0 inclusive to (p—1) inclusive and $f_0$ is taken equal to 1, is connected to all the elementary switching networks having addresses:

$$i_k=i+ \mathop{\pi}_{m=0}^{m=k} f_m$$

— and any elementary switching network having an address $i$ such that:

$$i \geqslant N- \mathop{\pi}_{m=0}^{m=k} f_m$$

is connected to all the elementary switching networks having addresses:

$$i_{p+k}=(i+1) \text{ modulo } \prod_{m=0}^{m=k} f_m$$

2.—A nodal structure switching network unit according to claim 1, characterized in that all the integers $f_1$ to $f_p$ are equal to one determined integer f and, consequently:

— any elementary switching network having an address *i* such that:

$$i \leqslant N - f^k - 1$$

is connected to all the elementary switching networks having an address $i_k$ such that:

$$i_k = i + f^k$$

— and any elementary switching network having an address *i* such that:

$$i \geqslant N - f^k$$

is connected to all the elementary switching networks having an address $i_{p,k}$ such that:

$$i_{p+k} = (i+1) \text{ modulo } f^k$$

## Patentansprüche

1. Knotenkoppelfeldeinheit mit einer Vielzahl von N Elementarknotenkoppelfeldern (0—22), deren Adressen zwischen 0 einschließlich und (N—1) einschließlich liegen, wobei N höchstens gleich dem Produkt

$$N = \prod_{m=1}^{m=p} f_m \quad \text{mit } 1 \leqslant m \leqslant p$$

aus den p ganzen Zahlen $f_1$ bis $f_p$ mit jedem der $f_1$ bis $f_p$ wenigstens gleich 2 und $1 \leqq m \leqq p$ ist, ferner mit externen Leitungen (101), die jedes Elementarknotenkoppelfeld mit Eingangs- und Ausgangsanschlüssen der Koppelfeldeinheit verbinden, sowie mit Knotenverbindungen (102), die jedes Elementarknotenkoppelfeld mit 2p anderen Elementarknotenkoppelfeldern verbinden,
dadurch gekennzeichnet, daß
jedes Elementarkoppelfeld, dessen Adresse i gegeben ist durch

$$i \leqq N - 1 - \prod_{m=0}^{m=k} f_m$$

mit k einer beliebigen ganzen Zahl von 0 einschließlich bis (p—1) einschließlich und mit $f_0$ gleich 1, mit allen Elementarkoppelfeldern verbunden ist, deren Adressen gegeben sind durch

$$i_k = i + \prod_{m=0}^{m=k} f_{m'}$$

und daß jedes Elementarkoppelfeld, dessen Adresse i gegeben ist durch

$$i \geqq N - \prod_{m=0}^{m=k} f_{m'}$$

mit allen Elementarkoppelfeldern verbunden ist, deren Adressen gegeben sind durch

$$i_{p+k}=(i+1) \text{ modulo } \prod_{m=0}^{m=k} f_m.$$

2. Knotenkoppelfeldeinheit nach Anspruch 1, dadurch gekennzeichnet, daß alle ganzen Zahlen $f_1$ bis $f_p$ gleich einer bestimmten ganzen Zahl f sind, und daß folglich jedes Elementarkoppelfeld, dessen Adresse i gegeben ist durch $i \leqslant N - f^k - 1$, mit allen Elementarknotenfeldern mit den Adressen $i_k = i + f^k$ verbunden ist und jedes Elementarkoppelfeld mit der Adresse $i \geqslant N - f^k$ mit allen Elementarkoppelfeldern mit den Adressen $i_{p+k}=(i+1)$ modulo $f^k$ verbunden ist.

## Revendications

1—Unité de réseau de commutation à structure nodale comprenant une pluralité de N réseaux de commutation nodaux élémentaires (0—22) ayant des addresses comprises entre 0 inclusivement et (N—1) inclusivement, N étant égal au plus au produit

$$N = \prod_{m=1}^{m=p} f_m \quad 1 \leqslant m \leqslant p$$

de p nombres entiers $f_1$ à $f_p$ dont chacun est au moins égal à 2, des lignes externes (101) connectant chaque réseau de commutation nodal élémentaire aux terminaux d'entrée et de sortie de l'unité de réseau de commutation et des liaisons internodales (102) connectant chaque réseau de commutation nodal élémentaire à 2p autres réseaux de commutation nodaux élémentaire, caractérisé en ce que chaque réseau de commutation élémentaire ayant une adresse *i* telle que

$$i \leqslant N - 1 - \prod_{m=0}^{m=k} f_m$$

où *k* est n'importe lequel des nombres entiers de 0 inclusivement à (p—1) inclusivement et $f_0$ est pris égal à l'unité, est connecté à tous les réseaux de commutation élémentaires ayant les adresses

$$i_k = i + \overset{m=k}{\underset{m=0}{\pi}} f_m$$

et chaque réseau de commutation élémentaire ayant une adresse $i$ telle que

$$i \geqslant N - \overset{m=k}{\underset{m=0}{\pi}} f_m$$

est connecté à tous les réseaux de commutation élémentaires ayant les adresses

$$i_{p+k} = (i+1) \text{ modulo } \overset{m=k}{\underset{m=0}{\pi}} f_m$$

2—Unité de réseaux de commutation à structure nodale conforme à la revendication 1, caractérisé en ce que les nombres $f_1$ à $f_p$ sont égaux à un nombre entier déterminé $f$, qu'en conséquence:

chaque réseau de commutation élémentaire ayant une adresse $i$ telle que

$$i \leqslant N - f^k - 1$$

est connecté à tous les réseaux de commutation élémentaire ayant une adresse $i_k$ telle que

$$i_k = i + f^k$$

et que chaque réseau de commutation élémentaire ayant une adresse $i$ telle que

$$i \geqslant N - f^k$$

est connecté à tous les réseaux de commutation élémentaires ayant une adresse $i_{p,k}$ telle que

$$i_{p+k} = (i+1) \text{ modulo } f^k$$

0 006 816

# FIG.1

# FIG.2

| i | $i_0$ k=0 | $i_1$ k=1 | $i_2$ k=2 | $i_3$ p=3, k=0 | $i_4$ p=3, k=1 | $i_5$ p=3, k=2 |
|---|---|---|---|---|---|---|
| 0 | 1 | 2 | 6 | – | – | – |
| 1 | 2 | 3 | 7 | – | – | – |
| 2 | 3 | 4 | 8 | – | – | – |
| 3 | 4 | 5 | 9 | – | – | – |
| 4 | 5 | 6 | 10 | – | – | – |
| 5 | 6 | 7 | 11 | – | – | – |
| 6 | 7 | 8 | 12 | – | – | – |
| 7 | 8 | 9 | 13 | – | – | – |
| 8 | 9 | 10 | 14 | – | – | – |
| 9 | 10 | 11 | 15 | – | – | – |
| 10 | 11 | 12 | 16 | – | – | – |
| 11 | 12 | 13 | 17 | – | – | – |
| 12 | 13 | 14 | 18 | – | – | – |
| 13 | 14 | 15 | 19 | – | – | – |
| 14 | 15 | 16 | 20 | – | – | – |
| 15 | 16 | 17 | 21 | – | – | – |
| 16 | 17 | 18 | 22 | – | – | – |
| 17 | 18 | 19 | – | – | – | 0 |
| 18 | 19 | 20 | – | – | – | 1 |
| 19 | 20 | 21 | – | – | – | 2 |
| 20 | 21 | 22 | – | – | – | 3 |
| 21 | 22 | – | – | – | 0 | 4 |
| 22 | – | – | – | 0 | 1 | 5 |

N = 23

# FIG.7

# FIG.3

| N | i | $i_0$ k=0 | $i_1$ k=1 | $i_2$ k=2 | $i_3$ p=3, k=0 | $i_4$ p=3, k=1 | $i_5$ p=3, k=2 |
|---|---|---|---|---|---|---|---|
| N=23 | 0 | 1 | 3 | 9 | – | – | – |
| | 1 | 2 | 4 | 10 | – | – | – |
| | 2 | 3 | 5 | 11 | – | – | – |
| | 3 | 4 | 6 | 12 | – | – | – |
| | 4 | 5 | 7 | 13 | – | – | – |
| | 5 | 6 | 8 | 14 | – | – | – |
| | 6 | 7 | 9 | 15 | – | – | – |
| | 7 | 8 | 10 | 16 | – | – | – |
| | 8 | 9 | 11 | 17 | – | – | – |
| | 9 | 10 | 12 | 18 | – | – | – |
| | 10 | 11 | 13 | 19 | – | – | – |
| | 11 | 12 | 14 | 20 | – | – | – |
| | 12 | 13 | 15 | 21 | – | – | – |
| | 13 | 14 | 16 | 22 | – | – | 6 |
| | 14 | 15 | 17 | – | – | – | 7 |
| | 15 | 16 | 18 | – | – | – | 8 |
| | 16 | 17 | 19 | – | – | – | 9 |
| | 17 | 18 | 20 | – | – | – | 0 |
| | 18 | 19 | 21 | – | – | – | 1 |
| | 19 | 20 | 22 | – | – | – | 2 |
| | 20 | 21 | – | – | – | 0 | 3 |
| | 21 | 22 | – | – | – | 1 | 4 |
| | 22 | – | – | – | 0 | 2 | 5 |

# FIG.5

| N | i | $i_0$ k=0 | $i_1$ k=1 | $i_2$ k=2 | $i_3$ p=3, k=0 | $i_4$ p=3, k=1 | $i_5$ p=3, k=2 |
|---|---|---|---|---|---|---|---|
| N=24 | ··· | ··· | ··· | ··· | ··· | ··· | ··· |
| | ··· | ··· | ··· | ··· | ··· | ··· | ··· |
| | 13 | 14 | 16 | 22 | – | – | – |
| | 14 | 15 | 17 | 23 | – | – | – |
| | 15 | 16 | 18 | – | – | – | 7 |
| | 16 | 17 | 19 | – | – | – | 8 |
| | 17 | 18 | 20 | – | – | – | 9 |
| | 18 | 19 | 21 | – | – | – | 0 |
| | 19 | 20 | 22 | – | – | – | 2 |
| | 20 | 21 | 23 | – | – | – | 3 |
| | 21 | 22 | – | – | – | 1 | 4 |
| | 22 | 23 | – | – | – | 2 | 5 |
| | 23 | – | – | – | 0 | 0 | 6 |

## FIG.4

## FIG.6

# FIG.8

SWITCHING
CONTROL
UNIT

230

5